# EUROPEAN PATENT APPLICATION

(11) **EP 0 651 496 A1**
(43) Date of publication of application: **03.05.1995**
(21) Application number: 94307832.9
(22) Date of filing: 25.10.1994
(51) Int. Cl.: H02K 17/16, H02K 15/00, B22D 19/00, C22C 1/00

(54) **Electric machine**

(30) Priority: 29.10.1993 GB 9322401
(71) Applicant: BROOK CROMPTON LIMITED, London SW1P 2PL (GB)
(72) Inventor: Walters, David Graham, Tickhill, Doncaster DN11 9NX (GB); Hurley, Stephen Paul, Finchfield, Wolverhampton WV3 8BS (GB)
(74) Representative: Treves, Barry William

(57) **Abstract**

A method of manufacturing a core (1) for an electric machine comprising injecting thixotropic material such as a copper alloy into the slots of a stack of laminations (2), the thixotropic material forming a cage (3) holding the laminations together.

## Description

This invention relates to an electric machine.

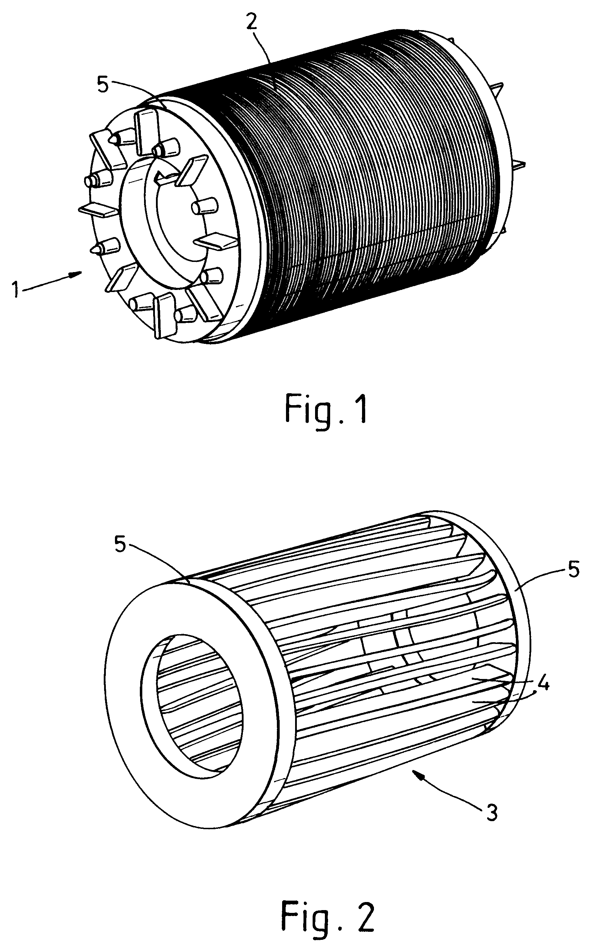

The rotor of an electric machine e g an induction motor conventionally comprises laminations stamped from sheets of electrical steel. During manufacture these laminations are placed on top of each other to form a cylindrical stack, and the stack placed in a press. Metal is then injected by a die casting process into slots formed in the stack to form a plurality of conductors extending along the length thereof. Two circular end rings are also moulded, one at each end of the stack, to connect the ends of the conductors. The combination of end rings and conductors so formed is known as a cage. Figure 1 of the drawings shows a completed core (which is the rotor in a finished motor) and Figure 2 shows the cage remaining after the laminations have been etched away.

The cage is required to have sufficient structural strength to hold the stack of laminations tightly in position during use of the motor, to have good electrical conductivity and to be relatively inexpensive to manufacture. Although it is known to manufacture cores with die cast copper cages, because of the high melting point of copper it is found that the high temperature die casting can cause damage to the end ring forming dies. Thus most motor cores are manufactured with die cast aluminium cages, since the melting point of aluminium is lower than that of copper. This results in less damage being caused to the end ring dies but by using aluminium, which has a lower electrical conductivity compared with that of copper, there is a consequential loss in motor efficiency.

It is an object of the present invention to provide a manufacturing method for a core which suffers less from the aforementioned disadvantages.

In accordance with the invention a method of manufacturing a core for an electric machine comprises forming a plurality of laminations, each having a plurality of slots, each slot being located at or near to the periphery of the lamination, positioning the laminations in a stack with the slots of the laminations in alignment to provide at least one elongated space extending through the stack, injecting thixotropic material into the space and allowing the material to set to form a cage, the stack of laminations being held together by the cage to provide the core.

End rings are also formed, one at each end of the stack, from the thixotropic material, said rings also forming part of the cage.

The injection is preferably carried out at a temperature below the solidus temperature of the material.

Suitable thixotropic materials include copper/metal alloys, copper/non-metal alloys, aluminium/metal alloys and aluminium/non-metal alloys.

One method of manufacturing a thixotropic material suitable for use in the present invention is disclosed in EP-B-0305375.

In accordance with the invention also, a rotor core for an electric machine comprises a stack of laminations and a cage formed from thixotropic material.

One embodiment of the invention will now be described by way of example with reference to the accompanying drawings of which:-
Figure 1 shows a photograph of a core of an induction motor;
Figure 2 shows a photograph of the cage of the core, the laminations having been etched away;

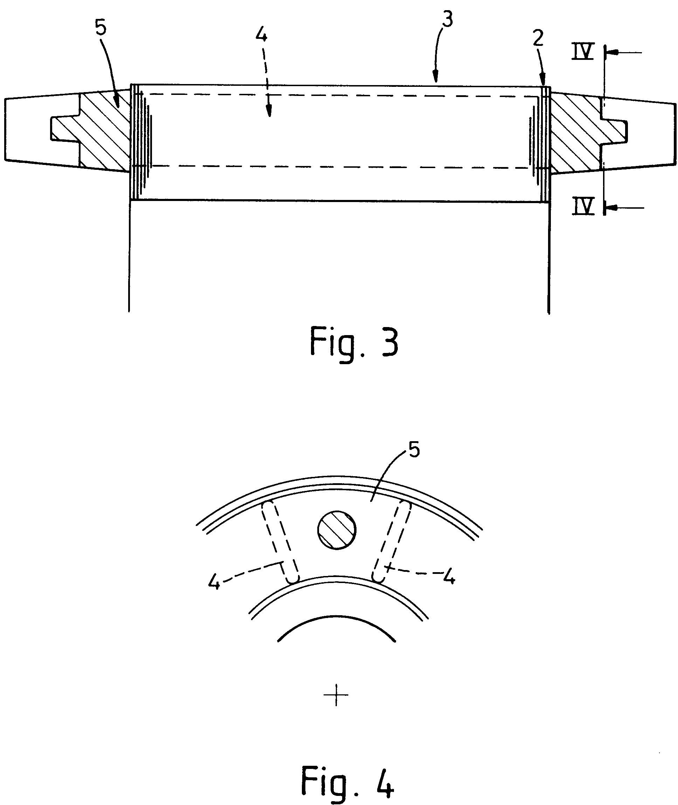

Figure 3 shows a longitudinal cross-section through part of the core; and
Figure 4 shows a section on line IV-IV of Figure 3.

The figures show a conventional configuration of the core rotor 1 of an induction motor formed of laminations 2 and a cage 3. Each lamination 2 is stamped or punched from electrical steel sheet so as to have a disc shape with a central aperture for fitment to a shaft and a plurality of radially-extending slots, in this embodiment twelve. The core of the invention has a similar shape and configuration to that of a conventional core

The required number of laminations are placed together to form a stack with the slots in alignment, skewed relative to the axis. The stack is then placed in a press and a slug of material with a non-dendritic micro-structure is placed on a ram on one of the platens of the press and heated into the semi-solid state. Once in this mushy state the material shows the property of shear thinning, i e when a shear force is applied it flows. The press and ram is operated so that the slug of material is forced into the spaces formed by the plurality of slots in the stack and end ring moulds provided at each end. The material flows to fill the spaces thus forming the conductors 4 and the moulds thus forming the end rings 5 in a non-turbulent manner. In this embodiment the material is a non-dendritic alloy of copper and cuprous oxide, the alloy containing less than 1% oxygen when in solid solution, manufactured e.g. by the method disclosed in EP-B-0305375.

After the metal has been allowed to set by removing the pressure and by cooling for a short period the core so formed is removed from the press and then passed on to subsequent conventional motor manufacturing stages.

It is found that by using the method of the present invention, several advantages result.

Firstly, because the material flows to form a cage in a non-turbulent manner, compared with the turbulent flow of material during die-casting, the likelihood of the formation of defects such as porosity and laps which would otherwise adversely affect the conductivity and structural integrity is much reduced. Secondly, because the material is not heated to its melting temperature, the energy requirement is less, being of the order of 65% of the energy required to melt the material.

Thirdly, the cost of the plant required for the method according to the invention is less than that for the plant required for high pressure die casting, because of the lower heat energy requirements and also because the thixoforming may be carried out with lower pressures compared with high pressure die casting. Fourthly, the cost of the dies will be less expensive due to the lower pressures and thus instead of using expensive high grade steel, for example, the die materials usable include mild steel, graphite and aluminium or copper alloys.

Finally, although it is not possible to thixoform pure copper, and a copper alloy having a lower electrical conductivity compared with pure copper must be used to form the cage, nevertheless the cage material has higher electrical conductivity compared with aluminium, thus improving motor efficiency.

## Claims

1. A method of manufacturing a core (1) for an electric machine comprising forming a plurality of laminations (2), each having a plurality of slots, each slot being located at or near to the periphery of the lamination, positioning the laminations in a stack with the slots of the laminations in alignment to provide at least one elongated space extending through the stack, characterised by injecting thixotropic material into the space and allowing the material to set to form a cage (3), the stack of laminations (2) being held together by the cage (3) to provide the core (1).

2. A method according to Claim 1 characterised in that the laminations (2) are placed together to form the stack with the slots in alignment skewed relative to the stack axis, the slots providing a plurality of spaces into which the thixotropic material is injected to form conductors (4) of the cage (3).

3. A method according to Claim 1 or Claim 2 characterised in that end rings (5) are also formed, one at each end of the stack, from the thixotropic material, said rings (5) also forming part of the cage (3).

4. A method according to any one of the preceding claims characterised in that the injection of the thixotropic material is carried out at a temperature below the solidus temperature of the material.

5. A method according to any one of the preceding claims characterised in that the thixotropic material is chosen from copper/metal alloys, copper/non-metal alloys, aluminium/metal alloys and aluminium/non-metal alloys.

6. A method according to any one of the preceding claims characterised in that the thixotropic material is manufactured by a method as disclosed in EP-B-0305375.

7. A rotor core for an electric machine comprising a stack of laminations and a cage (3) characterised in that the cage (3) is formed from thixotropic material.

8. A rotor core for an electric machine according to Claim 7 characterised in that the thixotropic material is chosen from copper/metal alloys, copper/non-metal alloys, aluminium/metal alloys and aluminium/non-metal alloys.

9. A rotor core for an electric machine according to Claim 8 or 9 characterised in that the cage (3) comprises a non-dendritic alloy of copper and cuprous oxide, the alloy containing less than 1% oxygen when in solid solution.

10. A rotor core for an electric machine according to Claim 8 or 9 characterised in that the cage (3) comprises a copper alloy having an electrical conductivity greater than that of aluminium.

11. A rotor core for an electric machine characterised by being manufactured by a method according to any one of Claims 1-6.
